# EUROPEAN PATENT APPLICATION

(11) **EP 1 251 425 A2**
(43) Date of publication of application: **23.10.2002**
(21) Application number: 01309828.0
(22) Date of filing: 22.11.2001
(51) Int. Cl.: G06F 9/38

(54) **Very long instruction word information processing device and system**

(30) Priority: 18.04.2001 JP 2001120175
(71) Applicant: FUJITSU LIMITED, Kawasaki-shi, Kanagawa 211-8588 (JP)
(72) Inventor: Yamana, Tomohiro, Kawasaki-shi, Kanagawa 211-8588 (JP); Tago, Shinichiro, Kawasaki-shi, Kanagawa 211-8588 (JP); Satoh, Taizoh, Kawasaki-shi, Kanagawa 211-8588 (JP); Takebe, Yoshimasa, Kawasaki-shi, Kanagawa 211-8588 (JP); Yamazaki, Yasuhiro, Kawasaki-shi, Kanagawa 211-8588 (JP)
(74) Representative: Stebbing, Timothy Charles

(57) **Abstract**

An information processing device for efficiently processing the VLIW instructions is disclosed. The information processing device includes an m×n (m-row x n-column) instruction buffer (21), a plurality of instruction executing parts (23) executing a plurality of instructions in parallel, and a control circuit for selecting a predetermined number of instructions from the m×n instruction buffer (21) and distributing the instructions to the instruction executing parts (23).

## Description

### BACKGROUND OF THE INVENTION

### 1. Field of the Invention

The present invention relates to an information processing device and particularly relates to a parallel-processing processor which can execute Very Long Instruction Words (VLIW).

Due to recent requirements for a higher processing speed of computing systems, it is required to increase number of instructions executable in parallel in a single clock cycle for each processor. To meet such a requirement, systems utilizing Very Long Instruction Words or VLIW instructions have been proposed. However, such systems have a problem that for some program, a considerable number of nops (no operation), i.e., instructions which do not need interpretation or execution thereof, are stored in a real memory. When there are a considerable number of nop instructions, more space in an instruction cache or a main memory becomes unusable. This may give rise to a reduction in performance. Accordingly, for VLIW systems, there is a need for a device which can store instructions executable in parallel into a real memory without adding any nop instruction, expand them into a group of instructions executable in parallel and supply the group of instructions executable in parallel.

### 2. Description of the Related Art

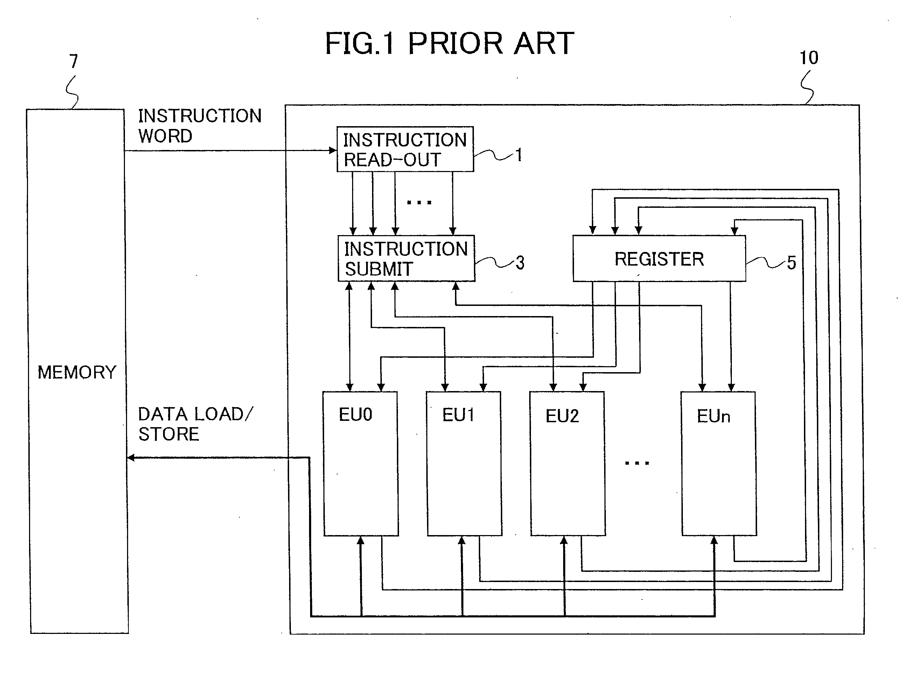

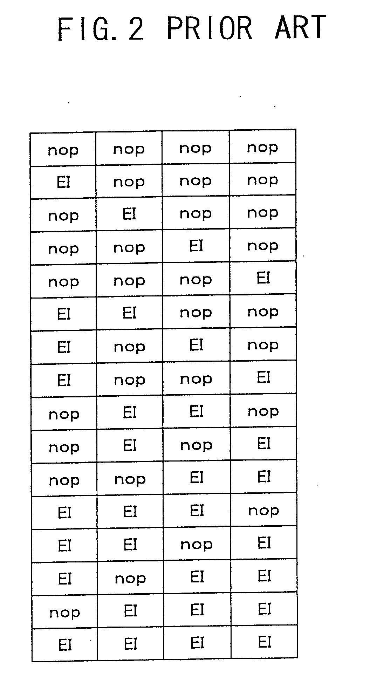

Firstly, referring to Figs. 1 and 2, a computing system using VLIW instructions will be described.

Fig. 1 shows a configuration of a parallel-processing processor of the related art. As shown in Fig. 1, the parallel-processing processor 10 of the related art includes an instruction read-out part 1 connected to a memory 7, an instruction submitting part 3 connected to the instruction read-out part 1, instruction executing parts EU0-EUn each connected to the instruction submitting part 3, and a register part 5 connected to all of the instruction executing parts EU0-EUn. The instruction read-out part 1 reads out instruction words from the memory 7 and supplies the instruction words to the instruction submitting part 3.

The instruction submitting part 3 submits elementary instructions in the supplied instruction words to the instruction executing parts EU0-EUn. If the instruction executing parts EU0-EUn are already executing preceding elementary instructions, the instruction submitting part 3 waits for the preceding instructions to complete, and then supplies next elementary instructions to the relevant instruction executing parts. The instruction executing parts EU0-EUn execute the supplied elementary instructions. Upon completion of executions, the instruction executing parts EU0-EUn inform the instruction submitting part 3 that the executions have been completed.

The register part 5 supplies data to the instruction execution parts EU0-EUn if necessary, and holds the result of execution at each of the instruction executing parts EU0-EUn. Also, the externally connected memory 7 stores a sequence of instruction words to be executed on the parallel-processing processor 10 and also stores data required by the instruction execution parts EU0-EUn for executing instructions and data obtained as a result of the execution.

Fig. 2 is a diagram showing a format of an instruction word supplied to the above-mentioned parallel-processing processor having four instruction-executing parts EU0-EUn. As shown in Fig. 2, the instruction word includes elementary instructions EI and non-operational instructions nop. It can be seen that the ratio of the non-operational instructions considerably high when the number of elementary instructions included in a single instruction word and executed in parallel is less than the number of instruction executing parts EU0-EUn.

In other words, with a system for parallel-processing a plurality of elementary instructions using the prior art VLIW, since the instruction words have fixed length, when the number of instruction words to be executed in parallel is less than a predetermined number, non-operational instructions must be added to the VLIW to provide a predetermined length. Therefore, for a program having a low degree of parallel processing of the instructions, an increase in the number of non-operational instructions causes an increase of the amount of instruction code. This causes problems such as a reduced usage efficiency of the memory, a reduced hit ratio of the cache memory and an increase in the load of the instruction read-out mechanism.

Some methods have been proposed to overcome such problems. For example, it is known to provide information in the instruction to indicate whether it is an nop instruction and to prohibit the operation of an operation part if it is a nop instruction (e.g., Japanese laid-open patent no. 8-161169). Another known method is to make use of variable length VLIW instructions to omit nop parts and to expand VLIW instruction including only executable instructions and assigning them among the operation parts (e.g., Japanese laid-open patent no. 11-281957 by the Applicant).

However, further improvements are possible with such known methods for efficiently reading out the VLIW instructions and for efficiently assigning them among the operation parts execute operations.

In detail, the instruction submitting part 3 of the prior art shown in Fig. 1 can hold n instructions supplied from the read-out part 1. That is to say, the instruction submitting part 3 has a 1×n (1-row x n-column) configuration. Instruction submitting part having such configuration is adopted for configurations described in the above-mentioned Japanese laid-open patent nos. 8-161169 and 11-281957. However, this is inefficient since the instruction submitting part 3 has a 1×n configuration and the VLIW instructions must be frequently read out from the memory 7. Also, since the VLIW instructions have a variable length, it is not guaranteed that all the VLIW instructions would be stored in the instruction submitting part 3. That is to say, there may be a case where only a part of a VLIW instruction is transferred to the instruction submitting part 3 and the remaining part remains in the memory 7. In such a case, the VLIW instruction cannot be executed until the remaining part of the VLIW instruction is read out from the memory 7 and transferred to the instruction submitting part 3.

### SUMMARY OF THE INVENTION

Accordingly, it is a general object of the present invention to provide an information processing device and a computing system which can obviate the above-mentioned prior art problems.

It is another and more specific object of the present invention to provide an information processing device and a computing system which can read out instructions such as VLIW instructions and distribute them to operation parts in an efficient manner.

In order to achieve the above-mentioned objects, the information device of the present invention an information processing device includes:
an m×n (m-row x n-column) instruction buffer;
a plurality of instruction executing parts executing a plurality of instructions in parallel; and
a control circuit selecting a predetermined number of instructions from the m×n instruction buffer and distributing the instructions to the instruction executing parts.

With the information processing device and a computing system described above, instructions such as VLIW instructions can be read out and distributed to operation parts in an efficient manner.

### BRIEF DESCRIPTION OF THE DRAWINGS

Fig. 1 is a block diagram showing a parallel processing processor of the related art.
Fig. 2 is a diagram showing a format of an instruction word supplied to the parallel processing process shown in Fig. 1 having four instruction executing parts.
Fig. 3 is a block diagram showing a parallel processing processor of a first embodiment of the present invention.
Fig. 4 is a diagram illustrating instructions used in the present invention.
Fig. 5 is a detailed block diagram of the parallel processing processor of Fig. 3.
Fig. 6 is a block diagram showing a variant of the parallel processing processor of a first embodiment of the present invention.
Fig. 7 is a block diagram showing a parallel processing processor of a second embodiment of the present invention.
Fig. 8 is a block diagram showing a configuration of a parallel processing processor of an embodiment of the present invention and a computing system including thereof.
Fig. 9 is a flowchart showing an operation of the controller shown in Fig. 8.
Fig. 10 is a diagram showing an arrangement of instructions used for explaining an example of an operation of the parallel processor shown in Fig. 8.

### DETAILED DESCRIPTION OF THE PREFERRED EMBODIMENTS

In the following, principles and embodiments of the present invention will be described with reference to the accompanying drawings.

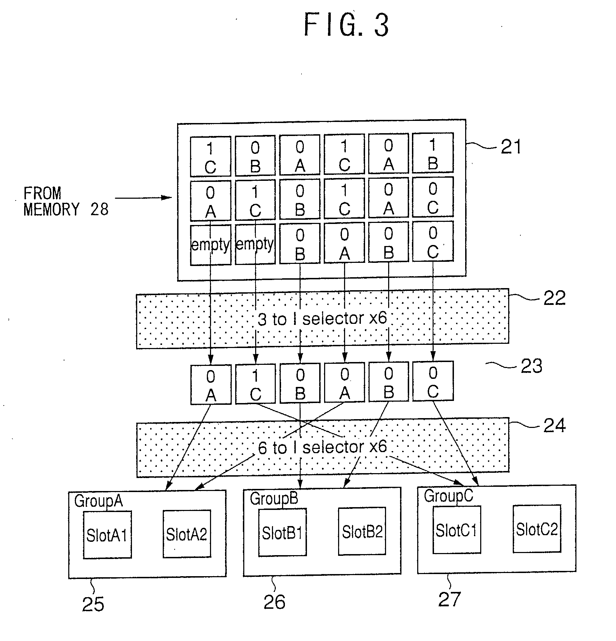

Fig. 3 is a block diagram showing a parallel processing processor of a first embodiment of the present invention. The parallel processor shown in Fig. 3 includes a first instruction buffer 21, a first selection circuit 22, a second instruction buffer 23, a second selection circuit 24 and groups operation parts 25, 26 and 27, each group including two operation parts.

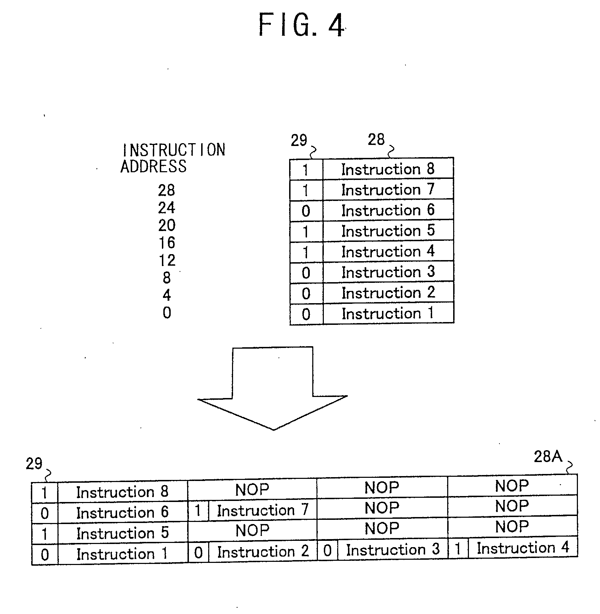

The first instruction buffer 21 has an m× n (m-row x n-column) configuration (m and n are each an arbitrary integer.) An example shown in Fig. 3 has a 3×6 configuration. The first instruction buffer 21 receives VLIW instructions of a variable length which are read out from a memory 28 described later with reference to Fig. 4, such that VLIW instructions are received as a group of n VLIW instructions and expanded to an m×n (m-row x n-column) configuration. Here, a row with n columns is defined as a block. Also, a portion holding a single instruction (an instruction portion and portions for holding the above-mentioned first and second information) is referred to as a unit buffer. Accordingly, the first instruction buffer 21 includes 18 (=3×6) unit buffers.

Referring now to Fig. 4, an instruction used in the present embodiment will be described. Fig. 4 shows a memory 28 used in the present embodiment and a plurality of instructions stored therein. The memory shown in Fig. 1 is indicated with reference numeral 7. The variable-length instructions used in the configuration of the present embodiment are each provided with a flag 29 which is information showing whether the relevant instruction is simultaneously executable. The flag 29 takes a value "0" or "1". For example, instruction 1 is provided with the flag 29 having a value "0" and instruction 4 is provided with the flag 29 having a value "1". The value "0" indicates that the instruction is a simultaneously executable instruction and the value "1" shows that the instruction is not an instruction which is simultaneously executable with an immediately succeeding instruction. In the example of Fig. 4, instructions 1 to 4 are simultaneously executable instructions. Since the flag 29 of instruction 4 takes a value "1", instruction 4 cannot be simultaneously executed with instruction 5. Since the flag 29 of instruction 5 takes a value "1", instruction 5 cannot be simultaneously executed with instruction 6.

When the memory 28 storing such a group of instructions is expanded two-dimensionally according the prior art method using nops, it gives a configuration as shown by reference numeral 28A in Fig. 4. One row includes four instructions and each row forms a single VLIW instruction. The instructions are stored in such a manner that four instructions are stored in the bottom row from left to right, and then four instructions are stored in the second row from the left to right. An instruction address shown in Fig. 4 is incremented by four per a single instruction. Each flag 29 added to the last instructions of each VLIW instruction takes a value "1". That is to say, the flag 29 is information showing a boundary between the VLIW instructions. (The flag 29 is referred to as a packing flag).

Instructions are read out from the memory 28 of Fig. 4 and are written in the first instruction buffer 21 shown in Fig. 3 in a block-by-block manner (i.e., six instructions at a time) sequentially from the bottom left. Digits "0" and "1" shown in Fig. 3 indicates above-mentioned packing flags. Note that in Fig. 3, labels indicating individual instruction in Fig. 4, such as instruction 1, are omitted.

Also, in Fig. 3, each unit buffer is labeled with symbols "A", "B" and "C". These symbols are second information applied to each of the instructions (note that the first information is a packing flag). The second information shows a type of instruction. In other words, it can be said that the second information shows one of the groups of operation parts 25 to 27 to be processed. The operation parts 25, 26 and 27 execute operations A, B, and C, respectively. For example, operations A, B and C are an integer number operation, a floating point operation and a branch instruction operation, respectively.

In the example shown in Fig. 3, instructions are written into the bottom row of the first instruction buffer from the left in a sequential manner. The first two unit buffers are empty and there are no instruction written in them. Subsequently, there are four instructions with flags "0" having instruction types "B", "A, "B" and "C", respectively. In the second bottom row (middle row), instructions having flags with values "0", "1", "0", "1", "0" and "0" and having instruction types "A", "C", "B", "C", "A" and "C" are written from the left. In the top row, instructions having flags with values "1", "0", "0", "1", "0" and "1" and having instruction types "C", "B", "A", "C", "A", "B" are written from the left.

As has been described above, the packing flags indicate the boundaries of the VLIW instruction. Therefore, in the example show in Fig. 3, the first VLIW instruction includes six instructions of instruction types "B", "A", "B", "C", "A" and "C", the second VLIW instruction includes two instructions of instruction types "B" and "C", and the third VLIW instruction includes three instructions of instruction types "A", "C" and "C", respectively. (Here, fourth and further VLIW instructions are not explained in detail). It is to be noted that the first VLIW instruction extends over two blocks (from the bottom row to the center row), and the third VLIW instruction also extends over two blocks (from the center rows to the top row). With the configuration of the present embodiment, the VLIW instructions extending over a plurality of rows (blocks) can be read out from the first instruction buffer in a single read operation. Since the prior art configuration is a 1×6 (1-row x 6-column) configuration, in order to process the above-describe VLIW, there is a restriction that a VLIW instruction must be complete within one row. Therefore, an efficient processing is cannot be implemented.

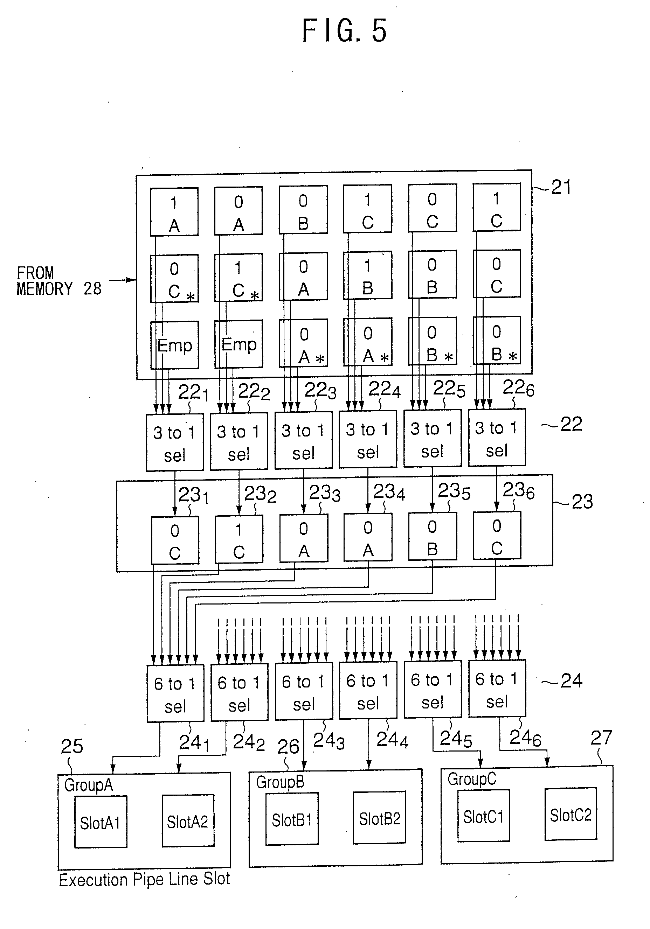

The first selection circuit 22 includes six selectors each having three inputs and one output (3 to 1 selectors). Fig. 5 is a detailed diagram of the configuration shown in Fig. 3. The first selection circuit 22 includes six selectors (sel) each having three inputs and one output (3 to 1 selectors) 22₁ to 22₆. Each selector 22₁ to 22₆ receives three instructions read out from three unit buffers of a corresponding column and selects one of them. For example, the selectors 22₁ to 22₆ each selects information read out from unit buffers accompanied by *. Selection is carried out by referring to the values of the packing flags. Selection control will be described later.

The selected instructions are held in the second instruction buffer 23. The second instruction buffer 23 has 1×n (in the present embodiment, 6 columns) configuration. That is to say, as shown in Fig. 5, the second instruction buffer 23 includes six unit buffers 23₁ to 23₆. Fig. 5 shows how the selected instructions are read out from the unit buffers accompanied by * and the selected instructions are stored. The output of each unit buffers 23₁ to 23₆ is supplied to the second selection circuit 24.

As shown in Fig. 5, the second selection circuit 24 includes six selectors (sel) having six inputs and one output (6 to 1 selectors) 24₁ to 24₆ . The six inputs of each selector 24₁ to 24₆ are connected to the outputs of six unit buffers 23₁ to 23₆. The outputs of the selectors 24₁ and 24₂ are connected to the group of operation parts 25. The outputs of the selectors 24₃ and 24₄ are connected to the group of operation parts 26. The outputs of the selectors 24₅ and 24₆ are connected to the group of operation parts 27.

The second selection circuit 24 implements a selection operation by referring to the instruction types "A", "B" and "C". For example, the selectors 24₁ and 24₂ connected to the group of operation parts 25 of type "A" select the unit buffers 23₃ and 23₄ holding instructions of type "A". Similarly, the selectors 24₃ and 24₄ connected to the group of operation parts 26 of type "B" select the unit buffers 23₅ and 23₆ holding instructions of type "B".

Each of the groups of operation parts 25 to 27 is provided with two pipeline slots (operation parts). The group of operation parts 25 is provided with pipeline slots A1 and A2, the group of operation parts 26 is provided with pipeline slots B1 and B2, and the group of operation parts 27 is provided with pipeline slots C1 and C2.

As has been described above, the VLIW instruction extending over a plurality of blocks can be simultaneously supplied to the groups of operation parts 25 to 27.

Accordingly, summarizing the first embodiment of the present invention, a parallel processing processor is provided which includes an information buffer 21 of m×n (m-row x n-column) configuration, instruction executing parts 25 to 27 for executing a plurality of instructions in parallel, a control circuit (a circuit including a first selection circuit 22, a second information buffer 23 and a second selection circuit 24) for selecting a predetermined number of instructions from the instruction buffer of m×n (m-row x n-column) and distributing them to the instruction executing parts.

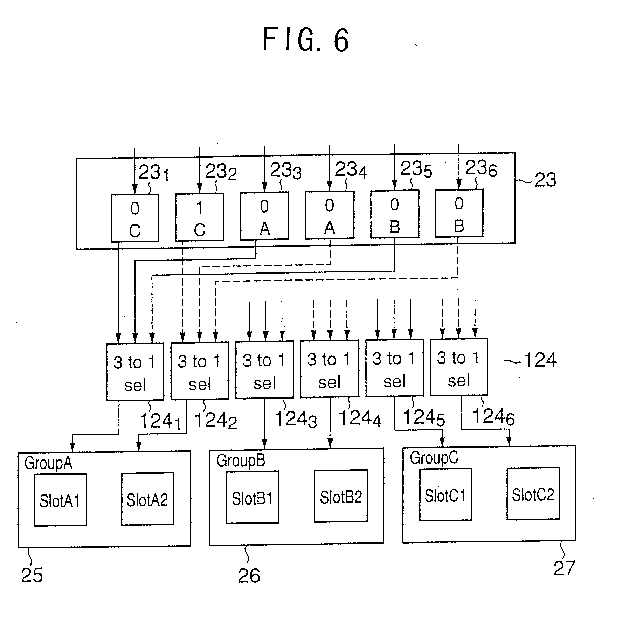

Fig. 6 is a block diagram showing a variant of the parallel processing processor of a first embodiment of the present invention. This variant is characterized in that a second selection circuit 124 shown in Fig. 6 is used instead of the second selection circuit 24 shown in Fig. 5. The second selection circuit 124 includes six selectors (sel) each having three inputs and one output (3 to 1 selectors) 124₁ to 124₆. Each one of the selectors 124₁ to 124₆ is connected to the predetermined three unit buffers of the second instruction buffer 23. For example, the selectors 124₁, 124₃, and 124₅ are connected to the outputs of the unit buffers 23₁, 23₃ and 23₅, respectively. The selectors 124₂, 124₄, and 124₆ are connected to the outputs of the unit buffers 23₂, 23₄ and 23₆, respectively.

The configuration shown in Fig. 6 corresponds to a case where a VLIW instruction that matches one of instructions in the sequence of predetermined simultaneously executable instructions is supplied from first instruction buffer 21 to the first selection circuit 22 and then outputted to the second instruction buffer 23. The sequence of predetermined simultaneously executable instructions implies that when there are two instructions of the same type, these must be arranged in a continuous manner.

Further, a configuration is considered in which the selectors 124₁ and 124₂ are directly connected to the pipeline slots A1 and A2 of the group of operation parts 25, respectively, the selectors 124₃ and 124₄ are directly connected to the pipeline slots B1 and B2 of the group of operation parts 26, respectively, and the selectors 124₅ and 124₆ are directly connected to the pipeline slots C1 and C2 of the group of operation parts 27, respectively. Then, the unit buffers 23₁, 23₃ and 23₅ accompanied by odd reference numerals are processed by the pipeline slots A1, B1 and C1 of odd reference numeral and the unit buffers 23₂, 23₄ and 23₆ accompanied by even reference numerals are processed by of pipeline slots A2, B2 and C2 of even reference numeral. That is to say, the VLIW instructions stored in the second instruction buffer 23 must meet such a condition (or rule).

In the configuration shown in Fig. 6, instructions are arranged in the memory 28 as a sequence of predetermined simultaneously executable instructions. For example, such an arrangement of instructions follows constraints that up to two instructions of types "A", "B" and "C" can exist in the VLIW instruction and if there are two instructions, instructions of the same type cannot be arranged at neighboring positions. In stead of such constraints, when reading out the instructions stored in the first instruction buffer 21, a controller described below may refer to the information indicating the type of instruction to determine whether it is a sequence of predetermined simultaneously executable instructions. Only when it is determined as a sequence of predetermined simultaneously executable instruction, the instruction is selected and transferred to the second instruction buffer 23.

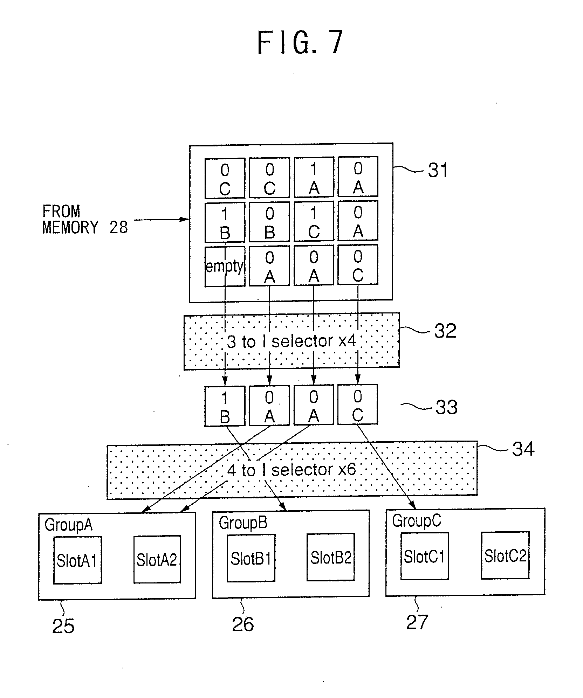

Fig. 7 is a block diagram showing a parallel processing processor of a second embodiment of the present invention. The configuration of the present embodiment is characterized in that in addition to a limitation on a sequence of predetermined simultaneously executable instructions, there is a limitation of a number of predetermined simultaneously executable instructions for processing the VLIW instructions.

The present embodiment includes a first instruction buffer 31 of a 3×4 (3-row x 4-column) configuration, a first selection circuit 32, a second instruction buffer 33 of a 1×4 (1-row x 4-column) configuration, a second selection circuit 34, and three groups of operation parts 25 to 27. The first selection circuit 32 includes four selectors having three inputs and one output (3 to 1 selectors). Each selector selects instructions read out from three unit buffers of the corresponding column and outputs them to the corresponding unit buffer of the second instruction buffer 33. The selection operation is carried out by referring to the packing flag added to each instruction.

The second instruction buffer 33 includes four unit buffers. That is to say, with the second embodiment, it is possible to deal with variable length VLIW instructions each including up to four instructions, i.e., VLIW having a maximum variable length of four. In general, the configuration of the second embodiment cannot deal with more than four VLIW instructions and, therefore, it is a configuration for a case where an upper limit of four is set as a number of simultaneously executable instructions.

With the second embodiment, instructions are arranged in the memory 28 such that there are no more than four predetermined simultaneously executable instructions. Alternatively, when reading out the instructions stored in the first instruction buffer 31, a controller described below may refer to the number of instructions included in the VLIW instruction to be processed to determine whether it meets the condition of the number of predetermined simultaneously executable instructions. Only when it is determined that it meets number of predetermined simultaneously executable instructions, the instructions are selected and transferred to the second instruction buffer 33.

The second selection circuit 34 includes four selectors each having four inputs and one output (4 to 1 selectors). The inputs of each selector are connected to four unit buffers of the second instruction buffer 33 and the output is connected to predetermined one of the groups of operation parts. That is to say, only the VLIW instruction having the sequence of predetermined simultaneously executable instructions is stored in the second instruction buffer 33. With the configuration of Fig. 7, when the length of the instruction is four, all arrangements such as "AABC", "AABC" and "ABCC" can be processed. Therefore, as in the case of the variant of the first embodiment described above (Fig. 6), instructions may be arranged in the memory 28 as a sequence of predetermined simultaneously executable instructions. Alternatively, when reading out the instructions stored in the first instruction buffer 31, a controller described below may refer to the information indicating the type of instruction to determine whether it is a sequence of predetermined simultaneously executable instructions.

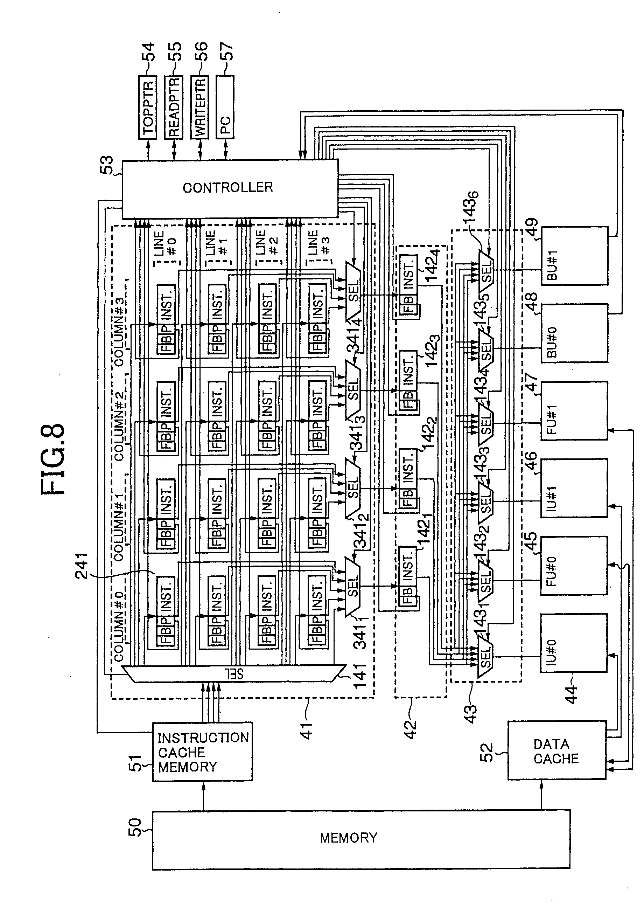

Fig. 8 is a block diagram showing a configuration of a parallel processing processor of an embodiment of the present invention and a computing system including thereof.

The computing system includes a memory 50, an instruction cache memory 51, a data cache memory 52, and a parallel processing processor described below. The parallel processing processor includes an instruction buffer 41, an instruction buffer 42, a selection circuit 43, operation parts 43 to 49, a controller 53, pointers 54 to 56 and a program counter 57.

The instruction buffer 41 is provided as an integrated configuration including the above-mentioned first instruction buffer 21 (or 31) and the first selection circuit 22 (or 32). The instruction buffer 41 has a 4×4 (4-row x 4-column) configuration including four rows #0 to #3 and four columns #0 to #3. The instruction buffer 41 is provided with sixteen (=4x4) unit buffers 241 arranged in four rows and four columns. Each unit buffer 241 includes a portion for storing an instruction (INST.), a portion for storing a packing flag (P) and a portion for storing flags for specifying types of operation (F, B). If the instruction is a floating point operation, the flags are set as F=1 and B=0. If the instruction is a branch instruction, the flags are set as F=0 and B=1. If the instruction is an integer operation, the flags are set as F=0 and B=0. Three operations identified by a combination of the flags F and B correspond to the above-described types of instruction A, B and C.

The instruction buffer 41 includes a selector 141. The selector 141 receives four instructions read out from the instruction cache memory 51 and writes them into a row (block) specified by the controller 53.

The instruction buffer 41 includes four selectors having four inputs and one output (4 to 1 selectors) 341₁ to 341₄. These selectors 341₁ to 341₄ correspond to the above-described first selection circuit 22 (32). The inputs of the selector 341₁ are connected to the outputs of the unit buffers 241 in column #0. Similarly, the inputs of the selectors 341₂ to 341₄ are connected to the outputs of the unit buffers 241 in column #1 to #3, respectively. These selectors 341₁ to 341₄ are controlled by the controller 53.

The instruction buffer 42 corresponds to the above-described second instruction buffer 23 (33) and includes four unit buffers 142₁ to 142₄. The unit buffers 142₁ to 142₄ receive outputs of the selectors 341₁ to 341₄, respectively.

The selection circuit 43 corresponds to the above-described second selection circuit 24 (34) and includes six selectors each having four inputs and one output (4 to 1 selectors) 143₁ to 143₄. The inputs of each of the selectors 143₁ to 143₄ are connected to the outputs of four unit buffers 142₁ to 142₄. Each of the selectors 143₁ to 143₄ selects one of the four inputs according to the instructions of the controller 53. The outputs of the selectors 143₁ to 143₄ are supplied to the operation parts 44 to 49, respectively.

The operating parts 44 and 46 are integer operation parts. The operating parts 45 and 47 are floating point operation parts. The operating parts 48 and 49 are branch instruction operation parts. The operating parts 44 to 47 communicate data to and from the cache memory 52. The operation results of the operation parts 48 and 49 are supplied to the controller 53.

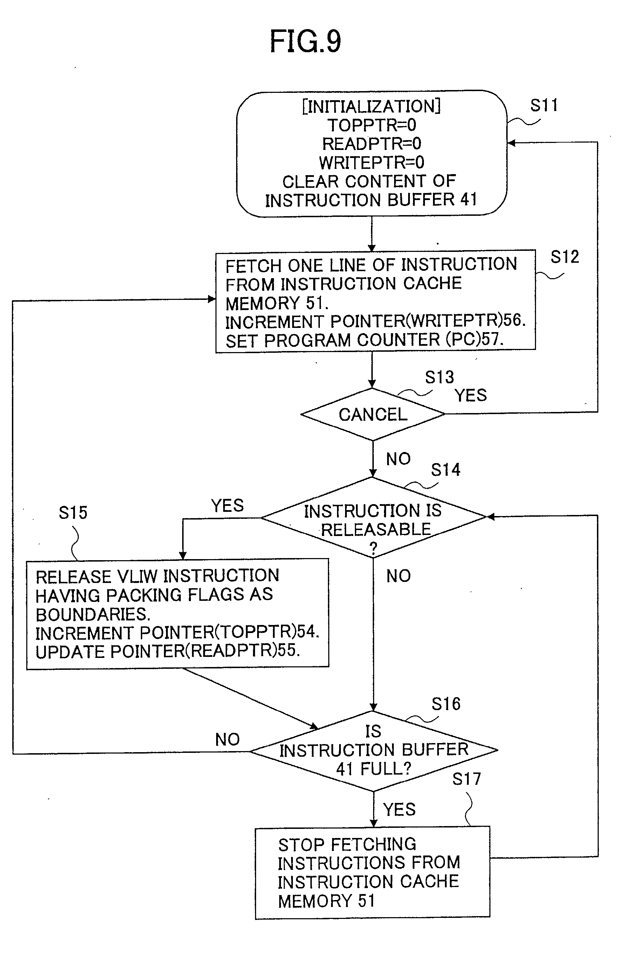

The controller 53 controls the instruction cache memory 51, the instruction buffer 41, the instruction buffer 42 and the selection circuit 43 in accordance with the flowchart shown in Fig. 9. Such a control is carried out using the pointers 54 to 56 and the program counter 57. The pointer (TOPPTR) 54 indicates on which row the starting address is placed. In other words, the pointer 54 points to one of the rows #0 to #3. The pointer (REAPTR) 55 indicates which of the four instructions in the row pointed by the pointer 54 is the starting instruction. That is to say, the pointer 55 specifies the starting address by the row number and the column number. The pointer (WRITEPTR) 56 indicates the row in which the instruction is to be stored in the instruction buffer 41. In other words, the pointer 56 points one of the row numbers #0 to #3. Even is the pointer 56 points to a certain row, no more instructions can be stored in the pointed row if the instruction buffer 41 is full of instructions. The program counter (PC) 57 stores an address on the instruction cache memory 51 when storing the instruction in the row. That is to say, the program counters PC#0 to PC#3 are provided for the rows #0 to #3, respectively, and stores an address on the instruction cache memory 51 when storing the instruction in the row. Note that in with the configuration shown in Fig. 8, the instructions are written in from the top left position of the instruction buffer (row #0, column #0).

Now, an operation of the computing system of Fig. 8 will be described with reference to Fig. 9. Fig. 9 is a flowchart showing a control operation of the controller 53.

Firstly, the controller 53 initializes the pointers 54, 55 and 56 to set pointer values to 0 and clears the content of each of the unit buffers 241 of the instruction buffer 41 (step S11). Then, the controller 53 retrieves (fetches) a row of instructions from the instruction cache memory 51, and increments the pointer 56 by one, and sets the program counter 57 (step S12). Then, the controller 53 determines whether or not to generate a cancel request (CANCEL) (step S13). The cancel request clears all instructions stored in the instruction buffer 41 when the fetched instruction are disabled by mistaken branch predictions and exceptions. When the result of determination of step S13 is YES, the controller 53 returns to step S11. When the result of determination of step S13 is NO, the controller 53 proceeds to step S14.

The controller 53 determines whether it is possible to supply (release) a VLIW instruction to the instruction buffer 42 (step S14). In other words, the controller 53 determines whether the instructions constituting a single VLIW instruction are stored in the instruction buffer 141. This determination is implemented by referring to the packing flag P. When the result of determination of step S14 is NO, the controller 53 proceeds to step S12. In step S12, four instructions are read into the next row and the pointer 56 is incremented by one. When the result of determination of step S14 is YES, the controller 53 proceeds to step S15.

The controller 53 releases the VLIW instruction having packing flags P as boundaries to the instruction buffer 42 (step S15). At the same time, the controller 53 increments the pointer 54 by one if necessary, and updates the pointer 55. Then, the process of the controller 53 proceeds to step S16.

The controller 53 determines whether the instruction buffer 41 is full or not (step S16). If it is determined that the instruction buffer 41 is not full, the process of the controller 53 returns to step S12. If it is determined that the instruction buffer 41 is full, the fetching of the instructions from the instruction memory 51 by the controller 53 is stopped (step S17). Then, the process returns to step S14.

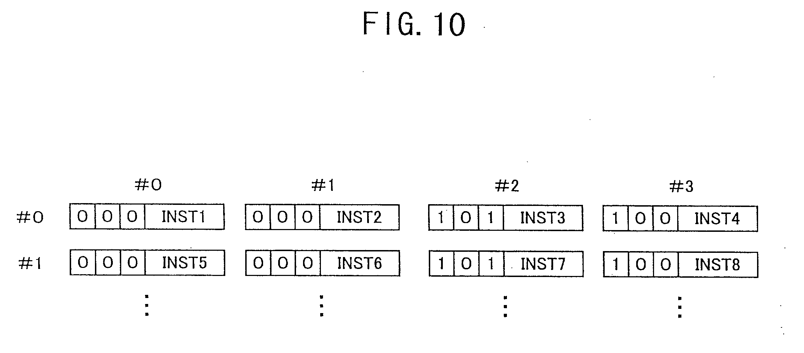

Now, an example of an operation according to the above-described flow chart will be described. An explanation is made with an example of storing the instructions into the instruction buffer 41 as shown in Fig. 10.

All unit buffers 241 in the instruction buffer 41 are reset and the pointers 54 and 56 are reset to row #0 (step S11). The pointer 55 is also reset to 0. In this state, four instructions INST1 to INST4 of a single row read out from the instruction cache memory 51 are fetched into the unit buffer 241 of row #0 (step S12). The pointer 56 is incremented and points to row #1. Step S13 is passed with the determination result NO, and the packing flag of row #0 is checked at step S14. Since the packing flag of the instruction INST 3 at position row #0, column #2 is "1", the result of determination of step S14 is YES.

In step S15, since the values of the pointers 54 and 55 are 0, and the packing flag at a position in column #2 is "0", INST1 to INST3 are stored in the unit buffers 142₁, 142₂, and 142₃ of the instruction buffer 42. Then, the pointer 55 is incremented to point to column #3. The pointer 54 is not incremented. Then, the process passes step S16 and proceeds to step S122.

Note that the controller 53 controls the selection circuit 43 by referring to the values of flags F and B stored in the unit buffers 142₁, 142₂, and 142₃. In this case, since the instruction INST1 has flags taking values of F=B=0, the selector 143₁ receives it from the unit buffer 142₁ and provides it to the operation part 44. Since the instruction INST2 also has flags taking values of F=B=0, the selector 143₃ receives it from the unit buffer 142₂ and provides it to the operation part 46. Since the instruction INST3 has flags taking values of F=1,B=0, the selector 143₂ receives it from the unit buffer 142₃ and provides it to the operation part 45.

In step S12, subsequent four instructions INST5 to INST8 are read out and stored in four unit buffers 241 of row #1 where the pointer 56 is pointing. Then, the process passes through the determination result of NO of step S13 and then proceeds to step S14. Since the determination result of step S14 is YES, the process proceeds to step S15.

The pointer 54 points to row #0 and the pointer 55 points to row #3. Also, the packing flag with a value "1" is at row #1, column #2. Accordingly, instructions INST 4 to INST 7 are read out and written into unit buffers 142₄, 142₁, 142₂, and 142₃ of the instruction buffer 42. Then the pointer 54 is incremented to point to row #1. Since the starting position of the next read out is column #3, the pointer 55 remains at value 3. Then, the process passes through step S16, and returns to step S12.

Since INST5 stored in the unit buffer 142₁ has flags taking values of F=B=0, it passes through the selector 143₁ of the selecting circuit 43 and is outputted to the operation part 44. Since INST6 stored in the unit buffer 142₂ also has flags taking values of F=B=0, it passes through the selector 143₃ of the selecting circuit 43 and is outputted to the operation part 46. Since INST7 stored in the unit buffer 142₃ has flags taking values of F=1, B=0, it passes through the selector 143₂ of the selecting circuit 43 and is outputted to the operation part 45. Since INST4 stored in the unit buffer 142₃ has flags taking values of F=1, B=0, it passes through the selector 143₄ of the selecting circuit 43 and is outputted to the operation part 47.

Accordingly, even in a case where the VLIW instruction extends over a plurality of rows (blocks), instructions can be executed in an efficient manner.

Also, the controller 53 may be provided with certain condition such as sequences of allowed instructions and an upper limit of the number of instructions and may be designed to have a function for determining whether the VLIW instructions stored in the instruction buffer 41 meet such conditions. In such a case, the controller 53 transfers only the VLIW instructions which satisfy the predetermined conditions to the instruction buffer 42.

Further, the present invention is not limited to these embodiments, and variations and modifications may be made without departing from the scope of the present invention.

The present application is based on Japanese priority application No. 2001-120175 filed on April 18, 2001, the entire contents of which are hereby incorporated by reference.

## Claims

1. An information processing device **characterized by** comprising:
an m×n (m-row x n-column) instruction buffer (21);
a plurality of instruction executing parts (23) executing a plurality of instructions in parallel; and
a control circuit (22) selecting a predetermined number of instructions from said m×n instruction buffer (21) and distributing said instructions to said instruction executing parts (23).

2. The information processing device as claimed in claim 1, **characterized in that** said control circuit (22) includes n selection circuits (22₁-22ₙ), each of said selection circuits selecting an instruction from m instructions of the corresponding column.

3. The information processing device as claimed in claim 1, **characterized in that** said control circuit (22) includes n selection circuits (22₁-22ₙ) and a control part (53) controlling said selection circuits, said control part (53) controlling said selection circuits (22₁-22ₙ) by referring to information included in each instruction indicating whether the instruction is simultaneously executable so as to select an instruction from m instructions of the corresponding column.

4. The information processing device as claimed in claim 1, **characterized in that** said control circuit (22) includes;
n first selection circuits (22₁-22ₙ);
a 1×n (1-row x n-column) buffer holding a predetermined number of instructions selected by said first selection circuits; and
a second selection circuit (24₁-24ₙ) distributing said instructions held in said 1×n buffer to said instruction executing part (23).

5. The information processing device as claimed in claim 4, **characterized in that** said first selection circuits (22₁-22ₙ) selects instructions based on first information included in each instruction, said first information indicating whether the instruction is simultaneously executable, and said second control circuit (24₁-24ₙ) selects instructions based on second information included in each instruction, said second information indicating a type of instruction of the instruction.

6. The information processing device as claimed in claim 1, **characterized in that** said control circuit (22) selects only the instructions which satisfy at least one predetermined condition.

7. The information processing device as claimed in claim 6, **characterized in that** said predetermined instructions include conditions related to a length of instruction or a combination of instructions.

8. The information processing device as claimed in claim 1, **characterized in that** said instruction executing part (23) includes a plurality of slots and said control circuit includes n first selection circuits (22₁-22ₙ) and a 1×n (1-row x n-column) buffer (142₁-142ₙ) holding a predetermined number of instructions selected by said first selection circuits (22₁-22ₙ), and
**in that** the number of said plurality of slots being greater than or equal to the number of said 1×n (1-row x n-column) buffers (142₁-142ₙ) holding n instructions.

9. The information processing device as claimed in claim 1, **characterized in that** said m×n instruction buffer (21) receives a group of instructions read out from a memory which does not include any NOP instruction.

10. A computing system including a memory storing instructions and a processor parallel processing said instructions read out from said memory,
**characterized in that** said processor includes;
an m×n (m-row x n-column) instruction buffer (21) ;
a plurality of instruction executing parts (23) executing a plurality of instructions in parallel; and
a control circuit selecting a predetermined number of instructions from said m×n instruction buffer (21) and distributing said instructions to said instruction executing parts (23).
